# NEW EUROPEAN PATENT SPECIFICATION

(11) **EP 0 078 675 B2**
(45) Date of publication and mention of the opposition decision: **30.11.1994**
(45) Mention of the grant of the patent: 25.01.1989
(21) Application number: 82305756.7
(22) Date of filing: 29.10.1982
(51) Int. Cl.: G01K 7/22

(54) **Heat sensitive cable and method of making same**
Hitzeempfindliches Kabel und sein Herstellungsverfahren
Câble thermosensible et procédé pour sa fabrication

(30) Priority: 02.11.1981 US 317631
(43) Date of publication of application: 11.05.1983
(73) Proprietor: Xco International Incorporated, Elgin Illinois 60120 (US)
(72) Inventor: Davis, Bayard C., Lombard Illinois 60148 (US)
(74) Representative: Griffin, Kenneth David

(56) References cited:
- DE-A- 1 773 577
- GB-A- 1 013 800
- US-A- 2 511 216
- US-A- 2 805 272
- US-A- 2 848 587
- US-A- 2 868 935
- US-A- 2 936 434
- US-A- 3 408 607
- US-A- 3 513 432
- US-A- 3 737 997

## Description

The present invention relates to heat sensitive devices and, more particularly, to a heat sensitive cable and method of making same.

Heat sensitive cables which are characterised by the use of semiconductive materials having inverse temperature-resistance characteristics in conjunction with dissimilar thermoelectric conductors are now well known in the art. Such constructions are particularly suitable where it is desired to monitor the greatest temperature existing along the length of the cable, and are exemplified in connection with a system for measuring and locating temperature conditions of interest in US Patent No. 3 408,607. Thermister cables which are characterised by a core of conductive material surrounded by a mass of material having a high negative temperature coefficient of electrical resistance which is covered with a protective metallic sheath are also well known in the art. German OS 1 773 577 describes a thermistor type device applicable for temperatures between 200 and 500°C, in which wires of the same metallic material are embedded in a semi-conducting substance such as untreated metal oxides contained within a bendable metallic protective tube. The publication specifically excludes the generation of thermo-electric potential differences.

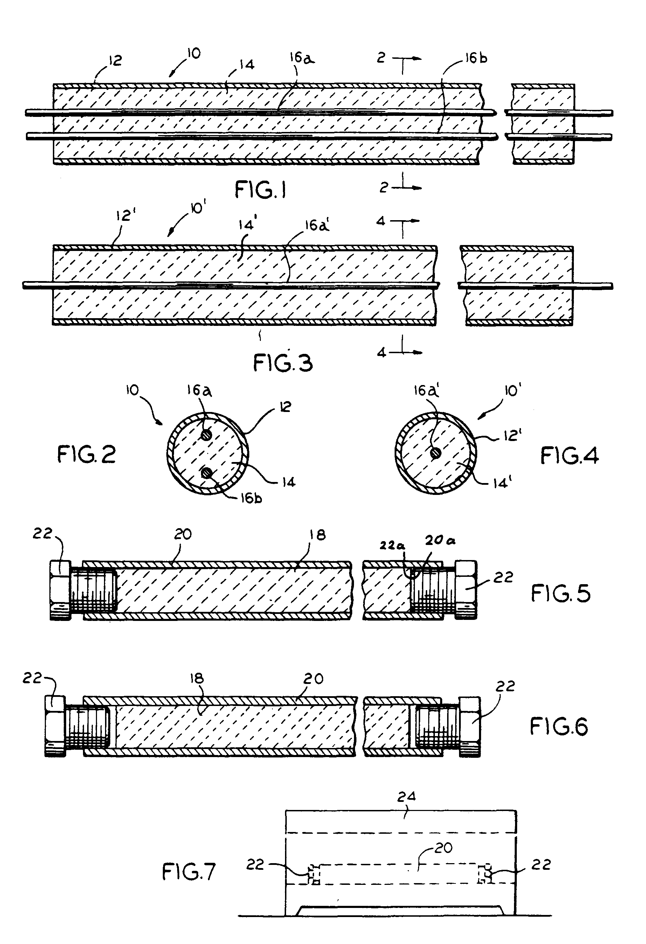

A heat sensitive cable is known from US Patent No.2 805 272 (see column 1, line 16 to column 2, line 2; column 2, line 14 to column 4, line 49; column 4, line 65 to column 5, line 14; Figures 1 and 2); it comprises an elongated substantially temperature resistant and moisture impervious tubular metallic sheath (11) and elongated conduction means (12) positioned within the sheath; the conductor means (12) is thermoelectrically dissimilar to the sheath (11), is disposed in spaced and substantially parallel relation to the sheath and extends out of at least one end of the sheath; insulation material (13) having a negative temperature coefficient has the function of positioning and electrically insulating the conductor means from the sheath; said insulation material (13) is a mi- cropulverised material, rendered somewhat plastic by a subsequent treatment and then submitted to a process in which the sheath wherein the material is placed is drawn for reducing the diameter of the sheath to bring the inner wall thereof into firm contact with the spacing material and thus the spacing material is compacted.

Also according to US Patent No. 2 805 272 (see column 2, lines 58 to 62) the insulation material can be fabricated by a process disclosed in US Patent No. 2 848 587 (see column 2 line 28 to column 5, line 65; Figures 1 to 3), and thus, said insulation material comprises heat treated manganese dioxide having an insulation resistance within the sheath variable with temperature, whereby a measurable temperature indicative voltage is continuously and passively self- generated.

It is to be noted that the electrical resistivity of the semiconductive spacing material of the cable known from US Patent No. 2 805 272 (see column 4, lines 29 to 49) can be selected, for a mentioned length of the cable, as being 100 ohms, i.e. within an insulation range bounded by a maximum insulation range of between approximately 100 and 50,000 ohms.

However, contrary to the insulation material of the present invention, the manganese dioxide of US Patent No.2 805 272 and US Patent No. 2 848 587 is heat treated in air or in a reducing or neutral atmosphere such as hydrogen or nitrogen and there is no indication that it is submitted to any heating treatment in vacuum.

Moreover, there is no indication in US Patent No 2 805 272 or US Patent No. 2 848 587 that the resistance of the cable should be approximately 50,000 ohms for a temperature of approximately -30°C, as in the present invention.

The device of US Patent No. 2 805 272 (see column 1, lines 16 to 23 and 34 to 38) is also of a "switch" type nature because a "predetermined temperature" is repeatedly mentioned; moreover, since US Patent No. 2 805 272 indicates that the material can be fabricated according to the teaching in US Patent No. 2 848 587 and since US Patent No. 2 848 587 (see in particular column 3, lines 71 to 74) stresses the feature of "a family of cables using the same basic metal oxide to meet specific requirements of different fire- detection applications", it is derivable that a predetermined temperature is meant for each cable of said family. The switching character of the device fabricated with an insulation material according to US Patent No. 2 848 587 (see column 5, lines 50 to 65; Figure 3) is also derivable from the values of measured resistance of the cable using manganese oxides, which provide a very steep slope (for instance 100,000/10, i.e. 10,000 for a range of temperature of about 400°F, i.e. about 220°C) as compared with a ratio of 50,000/100, i.e. 500 for a range of temperature of about 1000°C in the patent in suit. It is also to be noted that the operating range for devices fabricated according to US Patent No. 2 848 587 (see column 3, lines 62 to 71) is from approximately 200°F to 1000°F, i.e. 93°C to 537°C as compared with approximately between-30°C and 900°C for the cable of the present invention. Extrapolating the values derivable from the curves of Figure 3 shows that the resistance of the cable for -30°C would be in any case much higher than 50,000 ohms.

Thus, as indicated above, the known devices have a limited range of operation in temperature and are thus not versatile, whereas it is the object of the invention to provide a heat sensitive cable allowing continuous control over a broad range of temperature, and namely between approximately -30°C and 900°C. The non-switching character of the present invention, i.e. the gentle slope of the change in resistance as a function of temperature resulting from the particular method of treatment of the insulation material, credibly allows continuous predictable measurement over said wider range of temperature.

There is also no indication in US Patent No. 2 805 272 or US Patent No. 2 848 587 for treating a semiconductive oxide such as manganese dioxide in vacuum.

The treatment of material comprising manganese dioxide for thermosensitive electric components is known from US Patent No. 2 868 935 (see column 1, line 15 to column 2, line 3; column 2, line 68 to column 5, line 33), but in relation with different devices and namely conventional thermistors, wherein the resistance of the material varies with temperature; but there is no indication that the powdered crystalline material of the insulation material of US Patent No. 2 868 935, which is suspended in a thermoplastic binder, is compacted or submitted to a vacuum heating treatment, as in the case of the present invention.

It is to be noted that vacuum heat treatments of materials were not unknown to people skilled in the art; however, the required properties of the present insulation material are not obtained with any vacuum treatment but are directly related to the precise limited conditions specified below.

Despite the clear advantages and many applications for such cables, they have simply not evolved to the point of providing the desired degree of versatility. It has remained to develop a heat sensitive cable capable of generating a measurable and predictable voltage when the entire length of cable is at ambient whether ambient be at -30°C, 900°C, or some value therebetween. If this could be achieved with an inverse temperature-resistance material, the thermo- electric output of the cable or a section thereof would be altered in a predictable fashion when subjected to a temperature greater than ambient.

Moreover, if this could be achieved, the cable location where the increase in temperature takes place could be located electronically. This could be achieved, for instance, as fully disclosed and claimed in copending US Serial No. 887,089 filed 16 March 1978, now US Patent No. 4,324,138 (published on 13 April 1982), for a method of and apparatus and system for determining temperature conditions. As set forth therein, the applications are virtually limitless.

While the value of heat sensitive cable has long been recognised, it has remained to provide such a cable having the requisite versatility for the many applications to be benefited by use thereof. In fact, despite many prior inventions in this field by the inventor of the present application, as exemplified by US Patents Nos 3 408 607, 3 513,432 and 3 737,997 and also others, as exemplified by US Patents Nos 2 511,216 and 2 868,935, the missing link to provide a highly versatile cable has remained. Despite the advantages that will be recognized by those skilled in the art, heat sensitive cable which is operable over a temperature range of between approximately -30°C and 900°C has simply not been available.

The invention provides heat sensitive cables according to independent Claims 1 and 2.

The insulation material is obtainable by heating manganese dioxide in a vacuum furnace at a temperature of approximately 900°C for a period of time of between approximately 3 and 10 minutes with the vacuum furnace being drawn to a vacuum of approximately 66.661 Pa (500 microns of mercury) or less.

The vacuum furnace is advantageously preheated for a period of time of approximately 15 minutes after the manganese dioxide has been placed in the furnace at a temperature of approximately 675°C prior to raising the temperature of 900°C.

With the manganese dioxide treated as described, the insulation material has an insulation resistance of between approximately 3,000 and 6,000 ohms at approximately 22°C when compacted to approximately 70% of theoretical density within the tubular sheath.

In the cable with a pair of conductors one of the conductors is preferably a wire of nickel/chrome alloy and the other of the conductors is a wire of copper/nickel alloy, the nickel/chrome alloy comprising approximately 90% nickel and 10% chrome and the copper/nickel alloy comprising approximately 55% copper and 45% nickel.

In the cable with a single conductor the conductor is preferably a wire of nickel/chrome alloy comprising approximately 90% copper and 10% chrome, or a wire of copper/nickel alloy comprising approximately 55% copper and 45% nickel.

The sheath is advantageously formed of either 304 to 304L stainless steel or nickel/chrome/iron alloy comprising approximately 75% nickel, 15% chrome and 10% iron.

The invention further provides a method of manufacturing a heat sensitive cable operable over a temperature range, comprising the steps of:
advancing at least one thermoelectric conductor means for a starting position through a given region lying generally forwardly and axially of said starting position;
advancing a strip of flat metal material past tubular sheath forming means so as to form a tubular sheath therefrom in a position surrounding said given region;
concurrently depositing a sufficient amount of an insulation material within the formed sheath to fill said tubular formed sheath; and
advancing said sheath, said insulation material contained therein and said conductor means through means for reducing the diameter of said sheath and applying tension to said conductor means to compact said insulation material and permanently position said conductor means therein;
wherein prior to depositing said insulation material within the formed sheet, said insulation material is obtained by the steps of
providing manganese dioxide to be converted from a conductor into said insulation material and heating said manganese dioxide in a vacuum furnace at a temperature of approximately 900°C for a period of time of between approximately 3 and 10 minutes with said vacuum furnace drawn to a vacuum of approximately 66.661 Pa (500 microns of mercury) or less to convert said manganese dioxide to said insulation material having as said cable an insulation resistance variable with temperature in the range of between approximately 50,000 and 100 ohms within a temperature range of between -30°C and 900°C.

Preferably the manganese dioxide is placed in a tube having closure means in both ends thereof. The closure means, such as plugs, are threadingly engaged with the tube before placement of the tube in the vacuum furnace. Preferably, the plugs are tightened to compact the manganese dioxide in the tube and the plugs are loosened one turn before placement of the tube in the vacuum furnace.

With regard to reducing the diameter of the sheath, the sheath is suitable drawn to a diameter no smaller than approximately 87% of the outside diameter of the sheath as formed. It is then preferable to vacuum anneal the sheath after drawing for a period of time of between approximately 5 and 15 minutes at a temperature of approximately 900°C. If the sheath is to be reduced any further in diameter, the sheath is subsequently drawn and annealed after every 30% reduction in diameter until the diameter of the sheath has been reduced to a desired dimension.

In the drawings:
Figure 1 is a longitudinal cross sectional view of a heat sensitive cable in accordance with the present invention.
Figure 2 is a cross sectional view taken on the line 2-2 of Figure 1;
Figure 3 is a longitudinal cross sectional view of a modified heat sensitive cable in accordance with the present invention;
Figure 4 is a cross sectional view taken on the line 4-4 of Figure 3;
Figure 5 is a longitudinal cross sectional view of an apparatus for preparing a material for insulation in the cables illustrated in Figures 1 and 3;
Figure 6 is a view similar to Figure 5 showing the plugs loosened prior to heating; and
Figure 7 is a longitudinal view of the apparatus of Figures 5 and 6 in a vacuum furnace for heating of the material to be used as insulation in the cables of Figures 1 and 3.

Referring to the drawings, the first to Figure 1, the reference numeral 10 designates generally heat sensitive cable in accordance with the present invention. The cable includes a tubular metallic sheath 12 which is substantially temperature resistant and moisture impervious. It also includes a mass of compacted insulation material 14 which fills the sheath 12 and which has an insulation resistance variable with temperature in the range of between approximately 100 and 50,000 ohms. The cable further includes at least one thermoelectric conductor means, such as the wire 16a, positioned within the insulation material 14 filling the sheath 12. With these features of construction, the cable 10 is operable over a temperature range of between approximately -30°C and 900°C.

In accordance with the invention, the insulation material 12 comprises manganese dioxide which has been heated in a vacuum furnace at a temperature of approximately 900°C. The heating within the furnace takes place for a period of time within the range of between approximately 3 and 10 minutes with the vacuum furnace being drawn to a vacuum of approximately 66.661 Pa (500 microns of mercury) or less. Preferably, the vacuum furnace will have been preheated for a period of time of approximately 15 minutes after the manganese dioxide has been placed in the furnace at a temperature of approximately 675°C prior to raising the temperature to 900°C.

By treating the manganese dioxide in this fashion, the insulation material 12 will have a final insulation resistance of between approximately 3,000 and 6,000 ohms at approximately 22°C. These characteristics are particularly advantageous for measuring an increase from room temperature (ambient). As a result, the cable will generate a voltage differential in the presence of a localised temperature increase over the ambient temperature or a general temperature increase or decrease in the ambient temperature itself.

In the latter case, a conventional single point thermocouple can be incorporated to achieve still additional advantages. Specifically, this results in the production of a similar voltage increase for a similar temperature increase thereby providing the unique ability, e.g. to permit instrumentation to provide an alarm signal whenever an increase in local temperature exceeds the ambient by a preselected amount, regardless of the ambient temperature. In order words, comparing the voltage output of the heat sensitive cable of the present invention with the voltage output of a conventional single point thermocouple, it is possible to provide automatic linear ambient temperature adjustment.

In the embodiment illustrated in Figure 1, the cable 10 includes a pair of thermoelectric conductor means, such as wires 16a and 16b, positioned within the insulation material 12 fitting the sheath 10. It is advantageous for one of the wires 16a to be a wire of nickel/chrome alloy and the other of the wires 16b to be a wire of copper/nickel alloy, with the nickel/chrome alloy comprising approximately 90% nickel and 10% chrome and the copper/nickel alloy comprising approximately 55% copper and 45% nickel. Moreover, the sheath 10 is preferably formed of either 304 or 304L stainless steel or nickel/chrome/iron alloy with approximately 75% nickel, 15% chrome and 10% iron.

Referring to Figure 2, it will be appreciated how the wires 16a and 16b are disposed in spaced relation to one another and the sheath 12. The insulation material 14 completely surrounds each of the wires 16a and 16b, separating them from one another and from the sheath 12. However, since the insulation resistance of the insulation material 12 is only in the range of between approximately 100 and 50,000 ohms, the cable 10 is capable of generating measurable voltages across the wires 16a and 16b in accordance with the well known Seebeck effect anywhere within the range of temperatures of between approximately - 30°C and 900°C.

Referring to Figures 3 and 4, it wi be appreciated that the cable 10' similarly includes a sheath 12' containing an insulation material 14'. The principal difference between the embodiment illustrated in Figures 3 and 4 and the embodiment previously described in Figures 1 and 2 is that the cable 10'utilises only a single thermoelectric conductor means, such as wire 16a', rather than a pair of wires, such as 16a and 16b, in the earlier described embodiment. As will be appreciated by those skilled in the art, the cable 10' generates the measurable voltage between the wire 16a' and the sheath 12'.

With respect to the method of manufacturing the cable, the insulation material is prepared having a compacted insulation resistance in final form variable with temperature in the range of between approximately 100 and 50,000 ohms. Next, at lest one thermoelectric conductor means is advanced from a starting position through a given region lying generally forwardly and axially of the starting position. Them a strip of flat metal material is advanced past tubular sheath forming and welding means so as to form a tubular sheath therefrom in a position surrounding the given region. Next, a sufficient amount of the insulation material is concurrently deposited within the sheath to fill the formed sheath Finally, the sheath, insulation material contained therein and conductor means are advanced through means for reducing the diameter of the sheath and applying tension to the conductor means. With this method the insulation material is compacted and the conductor means is permanently positioned within the cable.

In order to avoid unduly lengthening the description herein, my invention disclosed and claimed in US Patent No. 3,737,997 is incorporated by reference as fully teaching the means by which the cable of the present invention may by continuously manufactured. It wi II be appreciated, however, that the means by which the insulation material is prepared is not taught in that patent and the preparation of the insulation material represents an important aspect of the present invention. Since it has not previously been possible to prepare an insulation material having a compacted insulation resistance in final form variable with temperature in the range of between approximately 100 and 50,000 ohms and operable within the extremely broad temperature range of the cable herein, the specifics of preparing the material will be set forth in some detail.

As previously mentioned, the insulation material comprises manganese dioxide heated in a vacuum furnace for period of time of between approximately 3 and 10 minutes at a temperature of approximately 900°C. The manganese dioxide 18 is preferably placed in a tube 20 (see Figure 5) having closure means such as plugs 22 in both ends thereof with the plugs 22 being threadingly engaged with the tube 20 before placement of the tube in the vacuum furnace 24 (see Figure 7). As shown in Figure 5, the plugs 22 are tightened to compact the manganese dioxide 18 after placement in the tube 20 and the plugs are subsequently loosened one turn (see Figure 6) before placement of the tube in the vacuum furnace 24. The manganese dioxide 18 has a grain size larger than any gap between the mating thread 20a and 22a of the tube 20 and the plugs 22. Otherwise, the manganese dioxide 18 could be drawn from the tube 20 into the vacuum furnace 24 causing damage to the vacuum pump.

As previously described, the vacuum furnace is drawn to a vacuum of approximately 500 microns of mercury after placement of the manganese dioxide into the furnace. The vacuum furnace is advantageously preheated after the manganese dioxide has been placed in the furnace for a time of approximately 15 minutes and at a temperature of approximately 675°C prior to raising the temperature to 900°C for the 3 to 10 minute time period. By utilising the parameters set forth, the insulation material which results has an insulation resistance when compacted in final form of between approximately 3,000 and 6,000 ohms at a temperature of approximately 22°C.

It will be appreciated that the diameter of the cable can be reduced by suitable means such as drawing. The process contemplates the sheath being drawn to a diameter no smaller than approximately 87% of the outside diameter of the sheath as formed after which the sheath is vacuum annealed for a time of between approximately 5 and 15 minutes at a temperature of approximately 900°C. Subsequently, the sheath can be drawn and annealed after every 30% reduction in diameter until the diameter of the sheath has been reduced to a desired dimension.

Depending upon the environmental conditions during the manufacturing process, the insulation material may absorb moisture. For this reason, the insulation material is preferably stored in a supply bin heated to a temperature of between approximately 105°- 120°C for deposit in the formed sheath. By utilising the heated supply bin, it is possible to prevent moisture accumulation in the insulation material.

With the present invention, it is possible to provide an essentially continuous heat sensitive cable, i.e. the cable can be produced in lengths of thousands of feet. Moreover, the heat sensitive cable of the present invention can be manufactured at a fraction of the cost of making conventional types of constructions of heat sensitive cable. As will be appreciated, heat sensitive cable proposed in the past could only be made in short lengths utilising labour intensive manufacturing methods.

At present, the final chemical composition of the insulation material is not known. It is known that pure manganese dioxide is an absolute electrical conductor. By heating the manganese dioxide in a vacuum furnace drawn to a vacuum of 66.661 Pa (500 microns of mercury) or less and heated at approximately 900°C for a period of time between approximately 3 and 10 minutes after a preheat at 675°C for approximately 15 minutes, a material is formed having a measurable insulation resistance, contrary to what might be expected, which is believed to be something in the nature Mn₂ 0₃ but with a higher oxygen content. It is known that this results in an insulation material which when compacted in final form has the desired resistance characteristics. Specifically, when compacted in final form, the insulation material has a resistance within a temperature range of between approximately -30°C and 900°C variable with temperature within a range of between approximately 100 and 50,000 ohms.

With the present invention, the heat sensitive cable provides a thermocouple temperature monitoring device which consists of a metallic tubular sheath containing two dissimilar metal thermocouple wires packed in a ceramic powder which is a semiconductor. The wires, surrounded by the ceramic powder, are spaced equidistant from each other and equidistant from the outer sheath. The cable is passive and self- generating to generate a voltage potential between the thermocouple wires which is indicative of the temperature existing along its entire length, or if the temperatures are unequal, at the hottest point along the cable length when subjected to external temperatures. When monitored by a high input impedance temperature device. the heat sensitive cable is capable of (1) precise, non-perishable, reproducible measurement of the temperature and (2) identification of the location of the hottest spot, and is capable of utilising varying combinations of materials to yield various mechanical properties and temperature-voltage response curves.

It will be understood that the invention is not to be limited to the specific embodiments shown and described or the uses mentioned. On the contrary, the specific embodiments and uses are intended to be merely exemplary with the present invention being limited only by the scope of the appended claims.

## Claims

1. A heat sensitive cable comprising: an elongated substantially temperature resistant and moisture impervious tubular metallic sheath (12); a pair of elongated thermoelectrically dissimilar conductor means (16a, 16b) positioned within said sheath, said conductor means being disposed in spaced and substantially parallel relation to each other and said sheath, said conductor means extending out of at least one end of said metallic sheath; and a compacted insulation material (14) for electrically insulating said conductor means from each other and said sheath and maintaining said conductor means in spaced and substantially parallel relation to each other and said sheath, said insulation material having an insulation resistance variable with temperature wherein said insulation material has an insulation resistance variable within a temperature range of between approximately -30°C and 900°C between approximately 50,000 and 100 ohms and is such that a measurable and predictable voltage is generated in said temperature range between said conductor means, said measurable and predictable voltage being indicative of the temperature existing along the entire cable length, or if temperatures are unequal, at the hottest point along the cable length when subjected to external temperatures, said voltage being generated continuously in said temperature range in a passive self- generating manner, and said insulation material is obtainable by heating manganese dioxide in a vacuum furnace at a temperature of approximately 900°C, for a period of time of between approximately 3 and 10 minutes, with said vacuum furnace drawn to a vacuum of approximately 66.661 Pa (500 microns of mercury) or less.

2. A heat sensitive cable comprising: an elongated substantially temperature resistant and moisture impervious tubular metallic sheath (12'); and elongated conductor means (16a') positioned within said sheath, said conductor means being thermoelectrially dissimilar to said sheath and being disposed in spaced and substantially parallel relation to said sheath, said conductor means extending out of at least one end of said metallic sheath; and a compacted insulation material (14') for electrically insulating said conductor means from said sheath and maintaining said conductor means in spaced and substantially parallel relation to said sheath said insulation material having an insulation resistance variable with temperature, wherein said insulation material has an insulation resistance variable, over a temperature range of between approximately - 30°C and 900°C between approximately 50,000 and 100 ohms and is such that a measurable and predictable voltage is generated in said temperature range between said conductor means and said sheath, said measurable and predictable voltage being indicative of the temperature existing along the entire cable length, or if temperatures are unequal, at the hottest point along the cable length when subjected to external temperatures, said voltage being generated continuously in said temperature range in a passive, self generating manner, and said insulation material is obtainable by heating manganese dioxide in a vacuum furnace at a temperature of approximately 900°C, for a period of time of between approximately 3 and 10 minutes, with said vacuum furnace drawn to a vacuum of approximately 66.661 Pa (500 microns of mercury) or less.

3. A cable according to Claim 1 or 2, characterised in that said manganese dioxide is preheated in said vacuum furnace for a period of time of approximately 15 minutes at a temperature of approximately 675°C prior to raising the temperature to 900°C.

4. A cable according to any one of Claims 1 to 3, characterised in that said insulation material has an insulation resistance of between approximately 3,000 and 6,000 ohms at a temperature of approximately 22°C when compacted to approximately 70% of theoretical density within said tubular sheath.

5. A cable according to Claim 1 and any claim appended thereto, characterised in that one of said conductor means is a wire of nickel/chrome alloy and the other of said conductor means is a wire of copper/nickel alloy.

6. A cable according to Claim 5, characterised in that said wire of nickel/chrome alloy comprises approximately 90% nickel and 10% chrome and said wire of copper/nickel alloy comprises approximately 55% copper and 45% nickel.

7. A cable according to Claim 2 and any claim appended thereto, characterised in that said conductor means is a wire of nickel/chrome alloy comprising approximately 90% copper and 10% chrome.

8. A cable according to Claim 2 and any claim appended thereto, characterised in that said conductor means is a wire of copper/nickel alloy comprising approximately 55% copper and 45% nickel.

9. A cable according to any one of Claims 1 to 8, characterised in that said sheath is formed of 304 stainless steel.

10. A cable according to any one of Claims 1 to 9, characterised in that said sheath is formed of nickel/chrome/iron alloy.

11. A cable according to Claim 10, characterised in that said nickel/chrome/iron alloy comprises approximately 75% nickel, 15% chrome and 10% iron.

12. A heat sensitive cable according to any one of Claims 1 to 11, characterised in that said measurable voltage is indicative of the temperature existing along the entire length of said cable if there are equal temperatures.

13. A heat sensitive cable according to any one of Claims 1 to 12, characterised in that said measurable voltage is indicative of the temperature existing at the hottest point along the entire length of said cable if there are unequal temperatures.

14. A method of manufacturing a heat sensitive cable operable over a temperature range, comprising the steps of:
advancing at least one thermoelectric conductor means from a starting position through a given region lying generally forwardly and axially of said starting position;
advancing a strip of flat metal material past tubular sheath forming means so as to form a tubular sheath therefrom in a position surrounding said given region;
concurrently depositing a sufficient amount of an insulation material within the formed sheath to fill said tubular formed sheath; and
advancing said sheath, said insulation material contained therein and said conductor means through means for reducing the diameter of said sheath and applying tension to said conductor means to compact said insulation material and permanently position said conductor means therein;
wherein prior to depositing said insulation material within the formed sheet, said insulation material is obtained by the steps of:
providing manganese dioxide to be converted from a conductor into said insulation material and heating said manganese dioxide in a vacuum furnace at a temperature of approximately 900°C for a period of time of between approximately 3 and 10 minutes with said vacuum furnace drawn to a vacuum of approximately 66.661 Pa (500 microns of mercury) or less to convert said manganese dioxide to said insulation material having as said cable an insulation resistance variable with temperature in the range of between approximately 50,000 and 100 ohms within a temperature range of between -30°C and 900°C.

15. A method according to Claim 14, characterised in that said manganese dioxide is placed in a tube having closure means in both ends thereof, said closure means being threadingly engaged with said tube before placement of said tube in said vacuum furnace.

16. A method according to Claim 15, characterised in that said closure means are plugs tightened to compact said manganese dioxide in said tube after placement therein, said plugs being loosened approximately one turn before placement of said tube in said vacuum furnace.

17. A method according to Claim 16, characterised in that said plugs and tube have mating threads sized such that any gap therebetween is less than the grain size of said manganese dioxide being placed in said tube for heating in said vacuum furnace.

18. A method according to any one of Claims 14-17, characterised in that said vacuum furnace is preheated for a period of time of approximately 15 minutes after placing said manganese dioxide in said furnace at a temperature of approximately 675°C prior to raising the temperature of 900°C.

19. A method according to any one of Claims 14-18, characterised in that said insulation material has an insulation resistance of between approximately 3,000 and 6,000 ohms at a temperature of approximately 22°C when compacted to approximately 70% of theoretical density within said tubular sheath.

20. A method according to any one of Claim 14-19, characterised in that said diameter reducing means is drawing, said sheath being drawn to a diameter approximately 87% of the outside diameter of said sheath as formed.

21. A method according to Claim 20 characterised in that said sheath is vacuum annealed after drawing, said sheath being annealed for a time of between approximately 5 and 15 minutes at a temperature of approximately 900°C.

22. A method according to Claim 21, characterised in that said sheath is subsequently drawn and annealed after every 30% reduction in diameter until the diameter of said sheath has been reduced to a desired dimension.

23. A method according to any one of Claims 14 to 22 characterised by including the step of advancing a pair of thermoelectric conductor means from said starting position through said given region lying generally forwardly and axially of said starting position.

24. A method according to Claim 23, characterised in that one of said conductor means is a wire of nickel/chrome alloy and the other of said conductor means is a wire of copper/nickel alloy.

25. A method according to Claim 24, characterised in that said wire of nickel/chrome alloy comprises approximately 90% nickel and 10% chrome and said wire of copper/nickel alloy comprises approximately 55% copper and 45% nickel.

26. A method according to any one of Claims 14 to 25 characterised in that said flat metal material is a strip of 304 stainless steel.

27. A method according to any one of Claims 14 to 26, characterised in that said flat metal material is a strip of nickel/chrome/iron alloy.

28. A method according to Claim 27, characterised in that said strip of nickel/chrome/iron alloy comprises approximately 75% nickel, 15% chrome, and 10% iron.

29. A method according to any one of Claim 14 to 28, characterised in that said insulation material is stored in a supply bin heated to a temperature of between approximateiy105°-120°C for deposit in said formed sheath.

## Patentansprüche

1. Wärmeempfindliches Kabel, mit einer langgestreckten, im wesentlichen temperaturfesten und feuchtigkeitsundurchlässigen, rohrförmigen metallischen Hülle (12), mit einem Paar langgestreckter thermoelektrisch unterschiedlicher Leiter (16a, 16b) innerhalb der Hülle, welche Leiter zueinander und zur Hülle mit Abstand und im wesentlichen parallel verlaufen und über mindestens ein Ende der metallischen Hülle vorstehen, und mit einem verdichteten Isoliermaterial (14) zur elektrischen Isolierung der Leiter voneinander und von der Hülle und zur Aufrechterhaltung des Abstandes und des im wesentlichen parallelen Verlaufes der Leiter zueinander bzw. zur Hülle, wobei das Isoliermaterial einen temperaturabhängigen Isolationswiderstand besitzt, welcher Isolationswiderstand sich in einem Temperaturbereich zwischen etwa - 30°C und 900°C zwischen etwa 50.000 und 100 Ohm ändert, wobei in diesem Temperaturbereich zwischen den Leitern eine meßbare und voraussag bare Spannung erzeugt wird, welche eine Anzeige für die längs einer ganzen Kabellänge bestehende Temperatur oder, wenn die Temperaturen ungleich sind, für den heißesten Punkt längs der Kabellänge bei Einwirkung äußerer Temperaturen bildet, wobei diese Spannung in diesem Temperaturbereich kontinuierlich in einer passiven selbsterzeugenden Weise erzeugt wird, und wobei das Isoliermaterial durch Erhitzen von Mangandioxid in einem Vakuumofen bei einer Temperatur von etwa 900°C, während einer Zeit zwischen etwa 3 und 10 Minuten erhältlich ist, wobei in dem Vakuumofen ein Vakuum von etwa 66,661 Pa (500 gHg) oder weniger herrscht.

2. Wärmeempfindliches Kabel, mit einer langgestreckten, im wesentlichen temperaturfesten und feuchtigkeitsundurchlässigen, rohrförmigen metallischen Hülle (12'), mit einem langgestreckten Leiter (16a') innerhalb der Hülle, welcher Leiter zur Hülle thermoelektrisch verschiedenen ist zur Hülle im Abstand und im wesentlichen parallel verläuft und über mindestens ein Ende der metallischen Hülle vorsteht, und mit einem verdichteten Isoliermaterial (14') zur elektrischen Isolierung des Leiters von der Hülle und zur Aufrechterhaltung des Abstandes und des parallelen Verlaufes von Leiter und Hülle, wobei das Isoliermaterial einen temperaturabhängigen Isolationswiderstand besitzt, welcher Isolationswiderstand sich in einem Temperaturbereich zwischen etwa - 30°C und 900°C zwischen etwa 50.000 und 100 Ohm ändert, wobei in diesem Temperaturbereich zwischen dem Leiter und der Hülle eine meßbare und voraussagbare Spannung erzeugt wird, welche eine Anzeige für die längs der ganzen Kabellänge bestehende Temperatur oder, wenn die Temperaturen ungleich sind, für den heißesten Punkt längs der Kabellänge bei Einwirkung äußerer Temperaturen bildet, wobei diese Spannung in diesem Temperaturbereich kontinuierlich in einer passiven selbsterzeugenden Weise erzeugt wird, und wobei das Isoliermaterial durch Erhitzen von Mangandioxid in einem Vakuumofen bei einer Temperatur von etwa 900°C, während einer Zeit zwischen etwa 3 und 10 Minuten erhältlich ist, wobei in dem Vakuumofen ein Vakuum von etwa 66,661 Pa (500 gHg) oder weniger herrscht.

3. Kabel nach Anspruch 1 oder 2, dadurch gekennzeichnet, daß das Mangandioxid im Vakuumofen während einerZeitvon etwa 15 Minuten bei einer Temperatur von etwa 675°C vorgewärmt wird, bevor die Temperatur auf 900°C erhöht wird.

4. Kabel nach einem derAnsprüche 1 bis 3, dadurch gekennzeichnet, daß das Isoliermaterial einen Isolationswiderstand von etwa zwischen 3000 und 6000 Ohm bei einer Temperatur von etwa 22°C hat, wenn es in der rohrförmigen Hülle auf etwa 70% seiner theoretischen Dichte komprimiert ist.

5. Kabel nach Anspruch 1 bzw. einem daran anschließenden Anspruch, dadurch gekennzeichnet, daß einer der Leiter ein Draht aus Nickel/Chrom-Legierung und der andere Leiter einen Draht aus Kupfer/Nickel-Legierung ist.

6. Kabel nach Anspruch 5, dadurch gekennzeichnet, daß der Draht aus Nickel/Chrom-Legierung ungefähr 90% Nickel und 10% Chrom umfaßt und daß der Draht aus Kupfer/Nickel-Legierung etwa 55% Kupfer und 45% Nickel umfaßt.

7. Kabel nach Anspruch 2 bzw. einem daran anschließenden Anspruch, dadurch gekennzeichnet, daß der Leiter ein Draht aus Nickel/Chrom-Legierung ist, welche etwa 90% Kupfer und 10% Chrom enthält.

8. Kabel nach Anspruch 2 bzw. einem daran anschließenden Anspruch, dadurch gekennzeichnet, daß der Leiter ein Draht aus Kupfer/Nickel-Legierung ist, welche etwa 55% Kupfer und 45% Nickel enthält.

9. Kabel nach einem derAnsprüche 1 bis 8, dadurch gekennzeichnet, daß die Hülle aus rostfreiem 304-Stahl gebildet ist.

10. Kabel nach einem derAnsprüche 1 bis 9, dadurch gekennzeichnet, daß die Hülle aus einer Nickel/Chrom/Eisen-Legierung besteht.

11. Kabel nach Anspruch 10, dadurch gekennzeichnet, daß die Nickel/Chrom/Eisen-Legierung etwa 75% Nickel, 15% Chrom und 10% Eisen umfaßt.

12. Wärmeempfindliches Kabel nach einem der Ansprüche 1 bis 11, dadurch gekennzeichnet, daß die meßbare Spannung für die Temperatur entlang der gesamten Länge des Kabel repräsentativ ist, wenn dort gleiche Temperaturen herrschen.

13. Wärmeempfindliches Kabel nach einem der Ansprüche 1 bis 12, dadurch gekennzeichnet, daß die meßbare Spannung für die Temperatur am heißesten Punkt entlang der ganzen Kabellänge repräsentativ ist, wenn dort ungleiche Temperaturen herrschen.

14. Verfahren zur Herstellung eines wärmeempfindlichen Kabels, welches über einen Temperaturbereich hinweg verwendbar ist, mit folgenden Verfahrensschritten: Vorschieben wenigstens eines thermoelektrischen Leiters von einer Startstellung durch einen gegebenen Bereich, der im allgemeinen vor und in Axialrichtung von der Startstellung liegt;
Vorschieben eines Streifens von flachem Metallmaterial entlang von Mitteln zur Bildung einer rohrförmigen Hülle, so daß daraus eine rohrförmige Hülle, an einer Stelle gebildet wird, welche den gegebenen Bereich umgibt;
gleichzeitiges Ablegen einer hinreichenden Menge von Isoliermaterial innerhalb der geformten Hülle, um diese rohrförmige geformte Hülle zu füllen; und
Vorschieben der Hülle samt dem darin enthaltenen Isoliermaterial und den Leitern durch Einrichtungen zur Verringerung des Durchmessers der Hülle, wobei Zug auf die Leiter ausgeübt wird, um das Isoliermaterial zu komprimieren und die Leiter dauerhaft darin zu positionieren;
wobei vor dem Ablegen des Isoliermaterials innerhalb der geformten Hülle dieses Isoliermaterial durch folgende Schritte erhalten wird:
Vorsehen von Mangandioxid, das von einem Leiter in Isoliermaterial umwandelbar ist, und Erhitzen dieses Magandioxids in einem Vakuumofen bei einerTemperaturvon etwa 900°C während einer Zeit zwischen etwa 3 und 10 Minuten, wobei im Vakuumofen ein Vakuum von etwa 66,661 Pa (500 gHg) oderweniger herrscht, um dieses Magandioxid zu Isoliermaterial mit temperaturabhängigem Isolationswiderstand im Bereich zwischen etwa 50.000 und 100 Ohm innerhalb eines Temperaturbereichs von zwischen - 30°C und 900°C zu verwandeln.

15. Verfahren nach Anspruch 14, dadurch gekennzeichnet, daßdas Magandioxid in einem Rohr angeordnet wird, daß an beiden Enden verschließbar ist, wobei die Verschlußmittel mit dem Rohr verschraubt werden, bevor dieses in den Vakuumofen eingeführt wird.

16. Verfahren nach Anspruch 15, dadurch gekennzeichnet, daß die Verschlußmittel Stöpsel sind, welche angezogen werden, um das Mangandioxid in dem Rohr zu verdichten, nachdem es in dieses eingebracht worden ist, wobei diese Stöpsel um eine Drehung gelockert werden, bevor das Rohr in den Vakuumofen eingebracht wird.

17. Verfahren nach Anspruch 16, dadurch gekennzeichnet, daß die Stöpsel und das Rohr zusammenpassende Gewinde haben, so daß jeder Spalt dazwischen kleiner ist als die Korngröße des Mangandioxids, daß zur Erhitzung im Rohr angeordnet ist.

18. Verfahren nach einem der Ansprüche 14 bis 17, dadurch gekennzeichnet, daß der Vakuumofen während etwa einer Zeit von 15 Minuten nach der Einbringung des Mangandioxids in den Ofen bei einer Temperatur von etwa 675°C vorgeheizt wird, bevor die Temperatur auf 900°C erhöht wird.

19. Verfahren nach einem der Ansprüche 14 bis 18, dadurch gekennzeichnet, daß das Isoliermaterial einen Isolationswiderstand zwischen ewa 3000 und 6000 Ohm bei einer Temperatur von etwa 22°C aufweist, wenn es auf etwa 70% seiner theoretischen Dichte innerhalb der rohrförmigen Hülle komprimiert wird.

20. Verfahren nach einem der Ansprüche 14 bis 19, dadurch gekennzeichnet, daß das Mittel zur Verringerung des Durchmessers im Ziehen besteht, wobei die Hülle zu einem Durchmesser gezogen wird, der etwa 87% des Außendurchmessers der Hülle nach dem Formen beträgt.

21. Verfahren nach Anspruch 20, dadurch gekennzeichnet, daß die Hülle nach dem Ziehen vakuumgeglühtwird, wobei das Glühen während einer Zeit von etwa 5 bis 15 Minuten bei einer Temperatur von etwa 900°C durchgeführt wird.

22. Verfahren nach Anspruch 21, dadurch gekennzeichnet, daß die Hülle anschließend gezogen und geglüht wird, nach jeder 30%igen Reduktion im Durchmesser, bis der Durchmesser der Hülle auf das gewünschte Außenmaß reduziert ist.

23. Verfahren nach einem der Ansprüche 14 bis 22, dadurch gekennzeichnet, daß es einen Schritt umfaßt, daß ein Paar von thermoelektrischen Leitern aus der Startposition durch den gegebenen Bereich, der im allgemeinen vor und in Axialrichtung von der Startposition liegt, vorgeschoben wird.

24. Verfahren nach Anspruch 23, dadurch gekennzeichnet, daß einer der Leiter ein Draht aus Nickel/Chrom-Legierung ist und der andere Leiter ein Draht aus Kupfer/Nickel-Legierung.

25. Verfahren nach Anspruch 24, dadurch gekennzeichnet, daß der Draht aus Nickel/Chrom-Legierung etwa 90% Nickel und 10% Chrom umfaßt und der Draht aus Kupfer/Nickel-Legierung 55% Kupfer und 45% Nickel umfaßt.

26. Verfahren nach einem der Ansprüche 14 bis 25, dadurch gekennzeichnet, daß das flache Metallmaterial ein Streifen aus rostfreiem 304-Stahl ist.

27. Verfahren nach einem der Ansprüche 14 bis 26, dadurch gekennzeichnet, daß das flache Metallmaterial ein Streifen aus Nickel/Chrom/Eisen-Legierung ist.

28. Verfahren nach Anspruch 27, dadurch gekennzeichnet, daß der Streifen aus Nickel/Chrom/Eisen-Legierung etwa 75% Nickel, 15% Chrom und 10% Eisen umfaßt.

29. Verfahren nach einem der Ansprüche 14 bis 28, dadurch gekennzeichnet, daß das Isoliermaterial zum Einbringen in die geformte Hülle in einem auf eine Temperatur zwischen etwa 105°C und 120°C erhitzten Vorratsbehälter gelagert wird.

## Revendications

1. Câble sensible à la chaleur comprenant: une gaine (12) métallique, tubulaire, allongée, substantiellement résistante à la température et imperméable à l'humidité, une paire de conducteurs allongés, thermoélectriquement dissemblables (16a, 16b), disposés à l'intérieur de ladite gaine, ces conducteurs étant espacés et substantiellement parallèles l'un par rapport à l'autre et par rapport à la gaine, ces conducteurs s'étendant en dehors de l'une au moins des extrémités de la gaine métallique, et une matière isolante compactée (14) pour isoler électriquement ces conducteurs l'un par rapport à l'autre et par rapport à la gaine et pour maintenir lesdits conducteurs à l'état espacé et substantiellement parallèles l'un par rapport à l'autre et par rapport à la gaine, cette matière isolante ayant une résistance d'isolement variable avec la température, dans lequel ladite matière isolante a une résistance d'isolement variable entre 50.000 et 100 ohms approximativement, dans une gamme de températures allant approximativement de -30°C à 900°C, et elle est telle qu'une tension mesurable et prévisible soit engendrée dans ladite gamme de températures entre les conducteurs, cette tension mesurable et prévisible étant une indication de la température existante sur la longueur totale du câble ou, si les températures sont inégales, au point le plus chaud sur la longueur du câble quand il est soumis à des températures extérieures, ladite tension étant générée de manière continue dans ladite gamme de températures d'une manière passive, autogénératrice, et ladite matière isolante peut être obtenue en chauffant du dioxyde de manganèse dans un four sous vide, à une température de 900°C environ, pendant une durée comprise approximativement entre 3 et 10 minutes, ledit four sous vide étant mis à une dépression d'environ 66,661 Pa (500 microns de mercure) ou moins.

2. Câble sensible à la chaleur comprenant : une gaine (12') métallique, tubulaire, allongée, substantiellement résistante à la température et imperméable à l'humidité, et un conducteur allongé (16a') disposé à l'intérieur de cette gaine, ledit conducteur étant thermoélectriquement dissemblable à la gaine et étant disposé avec un espacement et étant substantiellement parallèle à la gaine, ce conducteur s'étendant en dehors de l'une au moins des extrémités de la gaine métallique, ainsi qu'une matière isolante compactée (14') pour isoler électriquement le conducteur par rapport à la gaine et maintenir ce conducteur à l'état espacé et substantiellement parallèle à la gaine, ladite matière isolante ayant une résistance d'isolement variable avec la température, dans lequel ladite matière isolante a une résistance d'isolement variable entre 50.000 et 100 ohms approximativement, dans une gamme de températures allant approximativement de -30°C à 900°C, et elle est telle qu'une tension mesurable et prévisible soit engendrée dans cette gamme de températures entre le conducteur et la gaine, cette tension mesurable et prévisible étant une indication de la température existante sur la totalité de la longueur du câble ou, si les températures sont inégales, au point le plus chaud sur la longueur du câble quand il est soumis à des températures extérieures, ladite tension étant générée de manière continue dans ladite gamme de températures d'une manière passive, autogénératrice, et ladite matière isolante peut être obtenue en chauffant du dioxyde de manganèse dans un four sous vide, à une température de 900°C environ, pendant une durée comprise approximativement entre 3 et 10 minutes, ledit four sous vide étant mis à une dépression d'environ 66,661 Pa (500 microns de mercure) ou moins.

3. Câble selon la revendication 1 ou 2, caractérisé en ce que le dioxyde de manganèse est préchauffé dans le four sous vide pendant une durée de 15 minutes approximativement, à une température de 675°C environ, avant l'élévation de la température jusqu'à 900°C.

4. Câble selon l'une quelconque des revendications 1 à 3, caractérisé en ce que la matière isolante a une résistance d'isolement comprise entre 3000 et 6000 ohms approximativement, à une température de 22°C environ, quand elle a été compactée jusqu'à 70 % environ de la densité théorique, à l'intérieur de ladite gaine tubulaire.

5. Câble selon la revendication 1, et l'une quelconque des revendications qui en dépendent, caractérisé en ce que l'un des conducteurs est un fil en alliage nickel/chrome et l'autre des conducteurs est un fil en alliage cuivre/nickel.

6. Câble selon la revendication 5, caractérisé en ce que le fil en alliage nickel/chrome comprend approximativement 90 % de nickel et 10 % de chrome et le fil en alliage cuivre/nickel comprend approximativement 55 % de cuivre et 45 % de nickel.

7. Câble selon la revendication 2 et l'une quelconque des revendications qui en dépendent, caractérisé en ce que le conducteur est un fil en alliage nickel/chrome comprenant approximativement 90 % de nickel et 10 % de chrome.

8. Câble selon la revendication 2 et l'une quelconque des revendications qui en dépendent, caractérisé en ce que le conducteur est un fil en alliage cuivre/nickel comprenant approximativement 55 % de cuivre et 45 % de nickel.

9. Câble selon l'une quelconque des revendications 1 à 8, caractérisé en ce que la gaine est en acier inoxydable 304.

10. Câble selon l'une quelconque des revendications 1 à 9, caractérisé en ce que la gaine est en alliage nickel/chrome/fer.

11. Câble selon la revendication 10, caractérisé en ce que l'alliage nickel/chrome/fer comprend approximativement 75 % de nickel, 15 % de chrome et 10 % de fer.

12. Câble sensible à la chaleur selon l'une quelconque des revendications 1 à 11, caractérisé en ce que la tension mesurable est l'indication de la température existante sur la totalité de la longueur du câble quand il existe des températures égales.

13. Câble sensible à la chaleur selon l'une quelconque des revendications 1 à 12, caractérisé en ce que la tension mesurable est l'indication de la température existante au point le plus chaud sur la totalité de la longueur du câble lorsqu'il existe des températures inégales.

14. Procédé de fabrication d'un câble sensible à la chaleur, utilisable dans une gamme de températures, comprenant les opérations consistant à :
- faire avancer au moins un conducteur thermoélectrique à partir d'une position de départ à travers une région donnée se trouvant dans l'ensemble en avant et dans l'axe de ladite position de départ ;
- faire avancer une bande de matière métallique plate au-delà de moyens de formation d'une gaine tubulaire de façon à former à partir de cette bande une gaine tubulaire dans une position entourant ladite région donnée;
- déposer concurremment une quantité suffisante d'une matière isolante à l'intérieur de la gaine formée pour remplir celle-ci ; et
- faire avancer cette gaine, la matière isolante contenue dans la gaine et le conducteur, à travers des moyens de réduction du diamètre de la gaine et d'application d'une traction au conducteur pour compacter la matière isolante et positionner de manière permanente le conducteur à l'intérieur de cette dernière ;
dans lequel, avant l'introduction de la matière isolante à l'intérieur de la gaine formée, cette matière isolante est obtenue par les opérations consistant à :
- se procurer du dioxyde de manganèse à convertir à partir d'un conducteur en ladite matière isolante, et chauffer ce dioxyde de manganèse dans un four sous vide à une température approximative de 900°C pendant une durée comprise approximativement entre 3 et 10 minutes, ledit four sous vide étant mis à une dépression d'environ 66, 661 Pa (500 microns de mercure) ou moins, pour convertir ce dioxyde de manganèse en ladite matière isolante ayant, tout comme ledit câble, une résistance d'isolement variable avec la température dans la gamme de 50000 à 100 ohms approximativement,. à l'intérieur d'une gamme de températures comprises entre -30°C et 900°C.

15. Procédé selon la revendication 14, caractérisé en ce que le dioxyde de manganèse est placé dans un tube ayant des moyens d'obturation à ses deux extrémités, ces moyens d'obturation étant vissés dans le tube avant la mise en place de celui-ci dans le four sous vide.

16. Procédé selon la revendication 15, caractérisé en ce que les moyens d'obturation sont des bouchons serrés pour compacter le dioxyde de manganèse dans le tube après remplissage de celui- ci, ces bouchons étant desserrés d'un tour environ avant la mise en place du tube dans le four sous vide.

17. Procédé selon la revendication 16, caractérisé en ce que les bouchons et le tube ont des filetages appropriés l'un à l'autre, en étant dimensionnés de façon que tout intervalle entre eux est moindre que la dimension des grains du dioxyde de manganèse placé dans le tube pour chauffage dans le four sous vide.

18. Procédé selon l'une quelconque des revendications 14 à 17, caractérisé en ce que le four sous vide est préchauffé pendant une durée de 15 minutes environ, après mise en place du dioxyde de manganèse dans ce four, à une température de 675°C environ, avant l'élévation de la température jusqu'à 900°C.

19. Procédé selon l'une quelconque des revendications 14 à 18, caractérisé en ce que la matière isolante a une résistance d'isolement comprise entre 3000 et 6000 ohms approximativement, à une température de 22°C environ, quand elle a été compactée jusqu'à 70 % environ de la densité théorique, à l'intérieur de la gaine tubulaire.

20. Procédé selon l'une quelconque des revendications 14 à 19, caractérisé en ce que ledit moyen de réduction de diamètre est une opération d'étirage, la gaine étant étirée jusqu'à un diamètre de 87 % environ du diamètre extérieur de ladite gaine quand elle a été formée.

21. Procédé selon la revendication 20, caractérisé en ce que la gaine est recuite sous vide après étirage, ladite gaine étant recuite pendant une durée de 5 à 15 minutes approximativement à une température de 900°C environ.

22. Procédé selon la revendication 21, caractérisé en ce que la gaine est étirée ultérieurement et recuite après chaque réduction de 30 % en diamètre jusqu'à ce que le diamètre de la gaine soit réduit à une dimension désirée.

23. Procédé selon l'une quelconque des revendications 14 à 22, caractérisé par l'incorporation de l'opération consistant à faire avancer une paire de conducteurs thermoélectriques à partir de ladite position de départà travers ladite région donnée se trouvant dans l'ensemble en avant et dans l'axe de cette position de départ.

24. Procédé selon la revendication 23, caractérisé en ce que l'un des conducteurs est un fil en alliage nickel/chrome et l'autre des conducteurs est un fil en alliage cuivre/nickel.

25. Procédé selon la revendication 24, caractérisés en ce que le fil en alliage nickel/chrome comprend approximativement 90 % de nickel et 10 % de chrome et le fil en alliage cuivre/nickel comprend approximativement 55% de cuivre et 45 % de nickel.

26. Procédé selon l'une quelconque des revendications 14 à 25, caractérisé en ce que la matière métallique plate est une bande en acier inoxydable 304.

27. Procédé selon l'une quelconque des revendications 14 à 26, caractérisé en ce que la matière métallique plate est une bande en alliage nickel/chrome/fer.

28. Procédé selon la revendication 27, caractérisé en ce que la bande en alliage nickel/chrome/fer comprend approximativement 75 % de nickel, 15 % de chrome et 10 % de fer.

29. Procédé selon l'une quelconque des revendications 14 à 28, caractérisé en ce que la matière isolante est conservée dans un réservoir d'alimentation chauffé à une température comprise entre 105°Cet 120°C environ pour être introduite dans la gaine formée.
